# EUROPEAN PATENT APPLICATION

(11) **EP 2 433 920 A2**
(43) Date of publication of application: **28.03.2012**
(21) Application number: 11183144.2
(22) Date of filing: 28.09.2011
(51) Int. Cl.: C04B 41/89

(54) **Treatment of ceramic bodies**

(30) Priority: 28.09.2010 SE 1051003
(71) Applicant: Ifö Sanitär AB, 295 22 Bromölla (SE)
(72) Inventor: Sandström, Liana, 224 75 Lund (SE)
(74) Representative: Ström & Gulliksson AB

(57) **Abstract**

A method (10) for glazing a ceramic body is presented. The method comprises the steps of applying (11) a first glaze layer to the ceramic body, the thickness of said first glaze layer being between 500 and 800 µm; applying (12) a second glaze layer, on top of the first glaze layer, before the first glaze layer is subject to firing, the second glaze layer being substantially thinner than the first glaze layer, which second glaze layer evens out the roughness of the first glaze layer by filling the space between coarse grains of said first glaze layer; and subjecting the ceramic body to a single firing process (13).

## Description

### Technical Field

This invention pertains in general to the field of treatment of ceramic bodies. More particularly the invention relates to glazing of such ceramic bodies.

### Background

Ceramic bodies are usually coated by glaze which is heated to provide an aesthetical, hygienic, and protective surface, to withstand microbiological growth, and chemical or mechanical wear.

This is possible, since a glazed ceramic body is smoother than the raw ceramic, which makes it easier to keep clean, which is important for a user.

The fired glazes known within the field comprise opacifiers, such as zirconium dioxide, zirconium silicate, tin oxide or similar, and are normally more or less glossy. However, their surfaces have some roughness due to the coarse grains of the opacifiers, which increase their sensitivity and deposits on the glaze. This adversely affects the aesthetical, hygienic and antibacterial properties of the glazed ceramic bodies, as well as their chemical resistance.

Such surfaces may also be harder to clean, since a rough surface not only requires water flushing and mechanical brushing to be cleaned, but even use of detergent agents or strong chemicals.

In an attempt to solve the above disadvantages, it is known to apply two layers of glazing for providing the required physical and chemical properties of the surface of the ceramic body.

Every layer that is applied to the body to be coated however requires a significant amount of processing; the deposition is followed by a firing, which is necessary to seal the glaze and produce a hard surface. Such processing is expensive, time consuming and not very environmentally friendly.

Although different attempts have been described in which the two glaze layer are subject to a common firing process, there is still a need for an improved two-layer glazing process which increases the surface quality of the glazed ceramic body.

Hence, an improved method for glazing ceramic bodies would be advantageous and in particular a method allowing for increased smoothness of the surface, cost-effectiveness, user friendliness and/or friendliness to the environment would be advantageous.

### Summary

Accordingly, the present invention preferably seeks to mitigate, alleviate or eliminate one or more of the above-identified deficiencies in the art and disadvantages singly or in any combination and solves at least the above mentioned problems by providing a method according to the appended patent claims.

The general solution according to the invention is to apply a first layer of glaze, a raw glaze, and immediately after that apply, wet-on-wet, a second layer of glaze, a top glaze, and shortly afterwards firing both layers at once.

According to an aspect of the invention, a method for glazing a ceramic body is provided. The method comprises the step of applying a first glaze layer to the ceramic body, a step of applying a second glaze layer on top of the first glaze layer, before the first glaze layer is subject to firing and a step of subjecting the ceramic body to a single firing process.

According to a further aspect, a method for glazing a ceramic body is provided. The method comprises the steps of applying a first glaze layer to the ceramic body, the thickness of said first glaze layer being between 500 and 800 µm; applying a second glaze layer, on top of the first glaze layer, before the first glaze layer is subject to firing, the second glaze layer being substantially thinner than the first glaze layer, which second glaze layer evens out the roughness of the first glaze layer by filling the space between coarse grains of said first glaze layer; and subjecting the ceramic body to a single firing process.

Preferably, the method is applied to a ceramic sanitary body, such as a toilet or a wash basin. Even more preferably, the method is applied to a sanitary body, such as a toilet or wash basin, which sanitary body is simultaneously fired with the glaze layers for forming a ceramic sanitary body.

The second glaze layer may be applied as an ultra thin layer having a thickness between 10 and 100 µm, and preferably below 50 µm.

The first and second glaze layers may be aqueous slurries.

The melting temperature interval of the first glaze layer may have a lower start point than the melting temperature interval of the second glaze layer.

The steps of applying the first and second glaze layers may be performed by spraying, dipping or painting.

The firing process may comprise the following steps: heating the ceramic body from ambient temperature to a sealing temperature; keeping the ceramic body at the sealing temperature; and cooling the ceramic body from the sealing temperature to ambient temperature.

The sealing temperature may be in the interval from 900 °C to 1300 °C.

The starting point of the melting temperature interval of the first glaze may be about 1140 °C and the starting point of the melting temperature interval of the second glaze may be about 1180°C. Further, the sealing temperature may be about 1200 °C.

The step of keeping the ceramic body at the sealing temperature may be between 30 and 130 minutes, and preferably 60 minutes.

According to an aspect, use of the method according to an aspect for producing a glazing is provided.

According to an aspect, use of the method according to an aspect for producing a glazed ceramic body is provided.

According to an aspect a glazing obtainable by the method according to an aspect is provided.

According to an aspect a glazed ceramic body obtainable by the method according to an aspect is provided.

The present invention has the advantage over the prior art that it provides a smooth glazed surface in one fire. This is cost-effective and environmentally friendly, and the finished product is easier to use, since it is easily cleaned.

### Brief Description of the Drawings

These and other aspects, features and advantages of which the invention is capable of will be apparent and elucidated from the following description of embodiments of the present invention, reference being made to the accompanying drawings, in which
Fig. 1 is a schematic overview of a method according to an embodiment;
Fig. 2 is a temperature curve of a method according to an embodiment; and
Fig. 3 is a schematic cross-section of a glaze according to an embodiment.

### Description of embodiments

Several embodiments of the present invention will be described in more detail below with reference to the accompanying drawings in order for those skilled in the art to be able to carry out the invention. The invention may, however, be embodied in many different forms and should not be construed as limited to the embodiments set forth herein. Rather, these embodiments are provided so that this disclosure will be thorough and complete, and will fully convey the scope of the invention to those skilled in the art. The embodiments do not limit the invention, but the invention is only limited by the appended claims. Furthermore, the terminology used in the detailed description of the particular embodiments illustrated in the accompanying drawings is not intended to be limiting of the invention.

The following description focuses on an embodiment of the present invention applicable to ceramic bodies, made from materials such as vitreous china, fine clay, or fine fire clay.

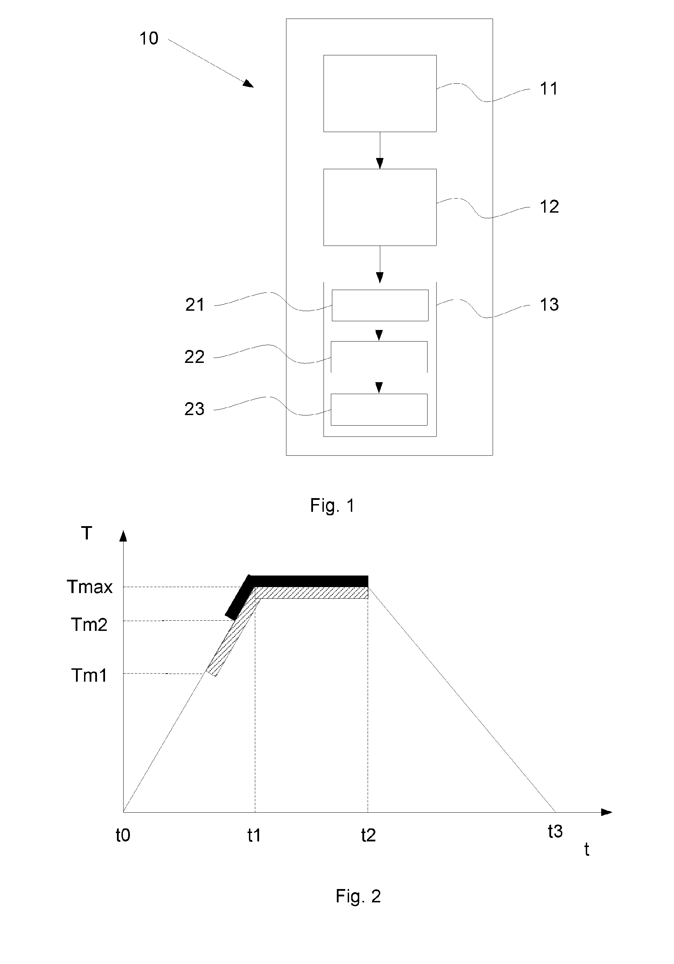

In an embodiment according to Fig. 1, a method 10 for glazing a ceramic body is provided. The method comprises a first step 11 of applying a raw glaze to the body.

The raw glaze may be an aqueous slurry of 61.5 % (weight) SiO₂, 11.7 % (weight) Al₂O₃, 0.1 % (weight) Li₂O, 6.2 % (weight) Na₂O+K₂O, 10.1 % (weight) CaO, 1.1 (weight) % MgO, 0.1 % (weight) B₂O₃, 0.1 % (weight) BaO, 1.9 % (weight) ZnO, and 7.2 % (weight) ZrO₂. The manufacturing is done in house by mixing raw materials with water, milling the resulting slurry in a Drais mill to a median diameter of approximately 3 µm and adjusting the viscosity to between 0.40 and 0.80 Pas and the density to between 1785 and 1795 g/l.

The method further comprises a second step 12 of applying a top glaze to the raw glaze layer.

The top glaze may be a transparent glaze from Endeka Ceramics Ltd, with a typical chemical composition such as: 68.0 - 74.0 % (weight) SiO₂, 9.0 - 13.0 % (weight) Al₂O₃, 9.0 - 13.0 % (weight) CaO/MgO, 4.0 - 6.0 % (weight) K₂O/Na₂O/Li₂O, 1.0 - 3.0 % (weight) ZnO and <1,0 % (weight) B₂O₃. The glaze is mixed with water to slurry with a density of 1650 to 1700 g/l and milled in a Drais or a ball mill to a median diameter of approximately 3 µm. After milling, the viscosity of the top glaze is adjusted to between 0.40 and 0.80 Pas.

The melting interval of the raw glaze starts around 1140°C where the glaze is completely melt between 1200° and 1250°C depending on the firing conditions, such as time and speed. The melting interval of the top glaze is between 1180 and 1250°C, with the maximum temperature depending of the firing conditions, such as time and speed.

The first and second glaze layers are aqueous slurries and thus, when applied sequentially, form a wet-on-wet twin-layer of glazes, since no treatment, such as drying or firing, of the first layer is performed before adding the second layer. By providing the second glaze layer in the form of an aqueous slurry on top of the first glaze layer, which also is in the form of an aqueous slurry, microscopic cracks and defects are prevented.

Such cracks or defects may occur due to drying and shrinkage of the first glaze layer and affects the quality of the first glaze layer in a negative manner. Consequently, the wet-on-wet application method is advantageous in that the quality of the entire glaze layer is improved.

The method comprises a third step 13 of firing the two glazes at once.

The firing takes place in a kiln, well known to a person skilled in the art, during a total time of 16 hours, with a peak, or maximum temperature of 1205 °C, also known as sealing temperature, held for 50-60 minutes, such as 60 minutes. As will be appreciated by a person skilled in the art, any kind of kiln known within the art may used, such as an intermittent kiln or a tunnel kiln.

In an embodiment according to Fig. 1, the firing process 13 comprises a first step of heating 21 the ceramic body from ambient temperature to a sealing temperature. Next, the firing process 13 comprises a step of keeping 22 the ceramic body at the sealing temperature, and also a step of cooling 23 the ceramic body from the sealing temperature to ambient temperature.

A temperature curve of the firing process according to an embodiment is provided in Fig. 2. The raw glaze melts slowly at lower temperatures, with a starting point Tm1. The raw glaze thus melts during the interval denoted by a striped bar. The top glaze melts just before the maximum temperature is reached, with a starting point at a higher temperature Tm2. The top glaze thus melts during the interval denoted by a black bar.

During the time between t0 and t1, i.e. the heating 21, the glazed body is heated from ambient temperature, such as room temperature, to the sealing temperature Tmax. When the temperature reaches Tm1, the raw glaze melts and the top glaze slurry is floating above the raw glaze. When the temperature reaches Tm2, the top glaze also melts. By having overlapping melting intervals, it is thus possible to retain the two glaze coatings with no, or at least very little mixing.

During the time between t1 and t2, i.e. the sealing or fusion, the glazes are sealed by keeping 22 the temperature substantially constant, as is known to a person skilled in the art. The time period t1 to t2 is chosen to be long enough to allow proper sealing, but short enough to prohibit unacceptable mixing of the raw layer and the top layer.

During the time between t2 and t3, i.e. the cooling 23, the glazed body is cooled from the sealing temperature Tmax to ambient temperature. The two glazes solidify when the temperature decreases below the respective end point of their respective melting intervals (not shown).

Hence, a twin layer glazing is obtained in one single firing process. This is advantageous because it is cost-effective, user friendly and/or environmental friendly, since only one firing process is needed.

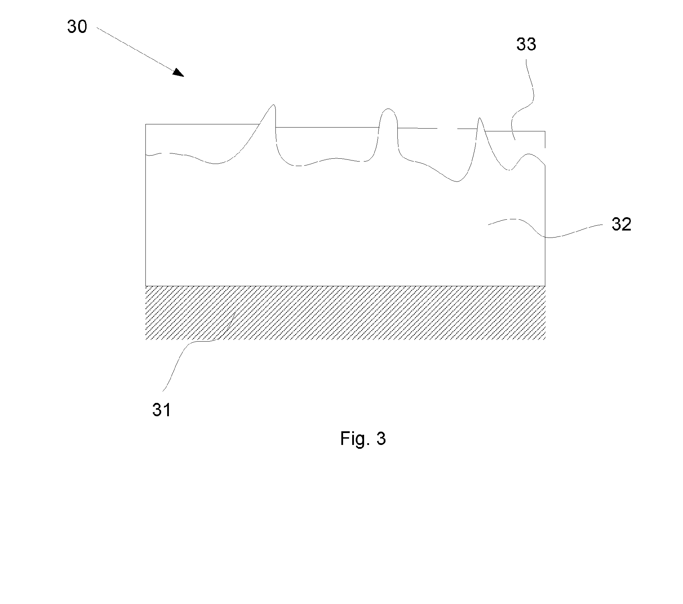

Fig. 3 shows a glazed ceramic body 30 according to an embodiment. The ceramic body 31 is coated with a first raw layer of glaze 31. The surface of the raw layer 31 is typically rough. Typically, the first glaze layer being a standard white glaze including opacifiers has a surface roughness after firing (without an additional second glaze layer on top) being in the range of 50 - 1000, wherein the interval specifies the Sa, i.e. the arithmetic mean of the absolute values of the surface departures from the mean plane). However, this roughness can be amended and significantly reduced by adding a second top layer of glaze 32, which evens out the roughness of the first layer. By applying the second glaze layer the roughness is decreased to Sa levels being in the range of 10 - 40. This is achieved by the fact that the second layer of glaze 32 covers the peaks of the first glaze layer caused by the unmeltable opacifier grains of the first glaze layer. Typically, the opacifier grains have a median diameter D50 (mass-median diameter) of approximately 1 µm. Typically, the thickness of the first layer is between 500 and 800 µm and the second layer is substantially thinner, such as between 10 and 100 µm. However, the appropriate respective thicknesses may vary depending on the respective glazes, which will be appreciated by a person skilled in the art.

The ceramic bodies may be any kind of ceramic bodies suitable for glazing, which will be appreciated by a person skilled in the art. The ceramic bodies may be glazed by spraying, either manually, by robot or by some similar transfer or deposition device. Alternately, the ceramic bodies may be glazed by dipping, painting, or a combination of the abovementioned methods.

Preferably, the ceramic bodies are sanitary wares such as basins, toilets, or similar articles being subjected to a major amount of water and impurities. The glaze layers may thus be applied to the sanitary body before the sanitary body has been fired, such that the sanitary body is fired during the glaze firing process. This process differs from techniques used for ceramic plates and similar articles, which are subject to a ceramic firing prior to the glaze application.

The two layers of glaze may be applied with the same or different coating pattern(s).

Coating may be done by placing the ceramic body on a carrier inside a glazing cell and applying glaze as an even layer all over the surface to be glazed.

As mentioned above, the glazing of a ceramic body comprises two steps, glazing with the raw glaze and afterwards glazing with the second glaze. The two layers may be applied by the same or different methods, as will be appreciated by a person skilled in the art.

When the raw glaze has been applied and is still wet, the second glaze is applied. The second glaze is applied immediately before any treatment of the first layer has been performed, after which the ceramic body is lifted from the carrier and placed on a kiln car, which carries it into a firing kiln.

As will be appreciated by the person skilled in the art, several different types of glazes may be used to obtain the above-mentioned result. Thus, the firing parameters may also vary. Below follows some example embodiments.

### The raw glaze

Raw glaze typically consists of a suspension of fine particles of raw minerals dispersed into water. It also consists of some binders which prevent the sedimentation of the particles and therefore improve the stability of the glaze. The rheology (viscosity and thixotropy) and the density of the raw glaze have to be optimal for that purpose depending on the glazing technique, which is appreciated by a person skilled in the art. It is extremely important to get an even and flat surface, especially on areas which afterwards would be glazed with a second glaze. During the glazing the suspension is applied on the ceramic body and the water transport is started. The water from the suspension is migrating through the pores of the ceramic body and the particles from the suspension are laying on the surface.

The surface of a raw glaze typically has some roughness due to the coarse grains of the opacifiers. Such opacifiers are well known to a person skilled in the art, but may be zirconium dioxide, zirconium silicate, or tin oxide.

The raw glaze may comprise oxides such as SiO₂, Al₂O₃, Li₂O, Na₂O, K₂O, CaO, MgO, B₂O₃, BaO, ZnO, or ZrO₂.

The viscosity may be 0.40 - 0.80 Pas. The density may be in the range 1785 - 1795 g/l. The thickness of the glaze layer after the glazing could be in the interval of 500 - 800 µm depending on the glaze recipe, but normally the thickness of the glaze layer is around 500 µm after the firing. Normally, values of Sa (arithmetic mean of the absolute values of the surface departures from the mean plane) are between 50-1000 for a white normal glaze with opacifier after the firing.

### The top glaze

Top glaze is typically slightly more refined than raw glaze, as is well known to a person skilled in the art. This is because the top glaze is the interface between the glazed body and the environment, which makes it important that it has a durable and smooth surface. Typically, the top layer is applied as an ultra thin layer, i.e. having a thickness between 10 and 100 µm, and preferably below 50 µm. The surface roughness of the top layer is preferably between 10 and 40 (Sa) after the firing.

The top glaze may comprise oxides such as SiO₂, Al₂O₃, Li₂O, Na₂O, K₂O, CaO, MgO, B₂O₃, BaO, ZnO, or ZrO₂.

The top layer may comprise oxides, agents or similar which increase its antibacterial properties.

The viscosity may be from 0.40 to 0.80 Pas. The density may be in the range from 1650 to 1700 g/l.

The two layers of glaze may comprise the same oxides but in different chemical compositions or Seger formulas.

The two layers of glaze may have the same rheology, density or ratio of additives such as binders, stabilizers or similar.

### The firing

As is known to a person skilled in the art, a glaze has a melting interval and not a melting point.

The melting temperature interval of the first glaze has a lower start point than the melting temperature interval of the second glaze layer. Thus, the second glaze will float on top of the first glaze melt, and the second glaze will melt later and quicker at a temperature nearer the peak temperature. According to a non-limiting theory of the inventor, the top glaze has a higher density in melt condition compared to the density of the raw glaze in melt condition. The respective layers are probably stabilized by wet suction into the ceramic body. Thus, according to theory, water from the first glaze layer is transported into the ceramic body as soon as the layer is applied, which makes the layer stick to the ceramic body and stabilizes the first layer. When the second glaze layer is applied, water from the second glaze layer is transported into the first glaze layer, which makes the second glaze layer stick to the first glaze layer and stabilizes the second layer. Altogether, these factors make it possible to glaze two (wet) coatings in one fire, without mixing of the two layers.

The starting point of the melting temperature interval of the respective glaze is depending on the specific glaze, but is typically in the interval between 1120 °C and 1140 °C for the first glaze and in the interval between 1180 °C and 1200 °C for the second glaze.

The sealing temperature may vary depending on the respective glazes, but it is typically in the interval between 900 °C and 1300 °C, such as about 1200 °C.

The sealing time may also vary depending on the respective glazes, but is typically in the interval between at least 30 and 130 minutes, such as 60 minutes, depending of the firing conditions, kiln construction and the temperature gradients inside the kiln. As stated above, it is generally possible to fire in either tunnel or intermittent kilns with good results. In an embodiment, use of a method according to embodiments described above for producing a glazing is provided.

An advantage with such use is that it is faster, since only one firing is needed.

In an embodiment, use of a method according to embodiments described above for producing a glazed ceramic body 30 is provided. The ceramic body 31 has a glaze layer comprising a raw layer 32 and a top layer 33.

An advantage with such use is that it is faster, since only one fire is needed.

In an embodiment, a glazing obtainable by the method according embodiments described above is disclosed.

An advantage with such glazing is that it is cheaper to produce and yet has a smooth surface.

In an embodiment, a glazed ceramic body 30 obtainable by the method embodiments described above is provided. The ceramic body 31 has a glaze layer comprising a raw layer 32 and a top layer 33.

An advantage with such glazing is that it is cheaper to produce and yet has a smooth surface.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

For example, the relation between the melting interval of the first glaze layer and the melting interval of the second glaze layer may be different, such that the melting interval of the first glaze layer expands over the melting interval of the second glaze layer. Further, the melting interval of the first glaze layer may also be lower or higher, e.g. with respect to the starting point or the ending point, than the melting interval of the second glaze layer. This may be accomplished by selecting suitable chemical formulas of the first and second glaze layers, respectively.

In the claims, the term "comprises/comprising" does not exclude the presence of other elements or steps. Furthermore, although individually listed, a plurality of means, elements or method steps may be implemented by e.g. a single unit. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A method (10) for glazing a ceramic body, comprising the steps of applying (11) a first glaze layer to the ceramic body, the thickness of said first glaze layer being between 500 and 800 µm;
applying (12) a second glaze layer, on top of the first glaze layer, before the first glaze layer is subject to firing, the second glaze layer being substantially thinner than the first glaze layer, which second glaze layer evens out the roughness of the first glaze layer by filling the space between coarse grains of said first glaze layer; and
subjecting the ceramic body to a single firing process (13).

2. The method according to claim 1, wherein the second glaze layer is applied as an ultra thin layer having a thickness between 10 and 100 µm.

3. The method according to claim 1 or 2, wherein the first and second glaze layers are aqueous slurries.

4. The method according to any of the preceding claims, wherein the melting temperature interval of the first glaze layer has a lower start point than the melting temperature interval of the second glaze layer.

5. The method according any of the preceding claims, wherein the steps of applying (11, 12) are performed by spraying, dipping or painting.

6. The method according to any of the preceding claims, wherein the firing process comprises the following steps:
heating (21) the ceramic body from ambient temperature to a sealing temperature;
keeping (22) the ceramic body at the sealing temperature; and
cooling (23) the ceramic body from the sealing temperature to ambient temperature.

7. The method according to claim 6, wherein the sealing temperature is in the interval from 900 °C to 1300 °C.

8. The method according to claim 7, wherein the starting point of the melting temperature interval of the first glaze is about 1140 °C and the starting point of the melting temperature interval of the second glaze is about 1180 °C.

9. The method according to claim 7, wherein the sealing temperature is about 1200 °C.

10. The method according to any of claims 6 to 9, wherein the step of keeping (22) the ceramic body at the sealing temperature is between 30 and 130 minutes.

11. The method according to claim 10, wherein the step of keeping (22) the ceramic body at the sealing temperature is 60 minutes.

12. Use of a method according to any of claims 1 to 11, for producing a glazing.

13. Use of a method according to any of claims 1 to 11, for producing a glazed ceramic body (30).

14. A glazing obtainable by the method according to any of claims 1 to 11.

15. A glazed ceramic body 30 obtainable by the method according to any of claims 1 to 11.
